# EUROPÄISCHE PATENTSCHRIFT

(11) **EP 3 626 394 B1**
(45) Veröffentlichungstag und Bekanntmachung des Hinweises auf die Patenterteilung: **07.06.2023**
(21) Anmeldenummer: 18195044.5
(22) Anmeldetag: 18.09.2018
(51) Int. Cl.: B24B 45/00, B27B 5/32, B23D 61/02, B23Q 17/22

(54) **SPANWERKZEUG**
CUTTING TOOL
OUTIL DE SERRAGE

(43) Veröffentlichungstag der Anmeldung: 25.03.2020
(73) Patentinhaber: Ledermann GmbH & Co. KG, 72160 Horb am Neckar (DE)
(72) Erfinder: FENDELEUR, Dominique, 67116 Reichstett (FR); BUHLER, Nathanael, 67630 Niederlauterbach (FR)
(74) Vertreter: Zurhorst, Stefan

(56) Entgegenhaltungen:
- EP-A2- 1 034 870
- DE-U1-202011 052 062
- US-A- 2 649 868
- US-A- 5 477 845
- US-A1- 2011 233 877
- US-A1- 2011 277 611

## Beschreibung

Die Erfindung betrifft ein Spanwerkzeug zur Anordnung auf einer zylinderförmigen Antriebswelle mit den Merkmalen nach dem Oberbegriff des Anspruchs 1.

Die Werkzeugschneiden eines von einer Antriebswelle angetriebenen Spanwerkzeugs verschleißen bei häufigem Einsatz schnell. Typischerweise ist bereits nach kurzer Einsatzzeit ein Austausch des Spanwerkzeugs erforderlich. Bei der Demontage des Spanwerkzeugs wird das Spanwerkzeug von der Antriebswelle abgezogen. Die anschließende Montage eines Spanwerkzeugs erfolgt durch Aufschieben des Spanwerkzeugs auf die Antriebswelle. Sowohl beim Abziehen als auch beim Aufschieben des Spanwerkzeugs auf die Antriebswelle schaben die Anlagevorsprünge der Nabe an der Oberfläche der Antriebswelle Material ab und verschleißen die Antriebswelle mit jedem Montage- und Demontagevorgang weiter. Hierbei entstehen Riefen in der Oberfläche der ursprünglich zylinderförmigen Antriebswelle, die das Rund- und Planlaufverhalten des Spanwerkzeugs negativ beeinflussen.

Aus der WO 2011/147755 A1 ist ein Spanwerkzeug bekannt, dessen Nabe eine Umfangswand mit drei Anlagevorsprüngen aufweist, die rotationssymmetrisch angeordnet und außerdem radial federnd ausgeführt sind. Bei der Montage findet eine radiale Aufweitung statt mit dem Ziel einer verbesserten Rundlaufgenauigkeit. Die radiale Aufweitung zieht aber auch eine erhöhte lokale Pressung nach sich. Die durch den schnellen Verschleiß der Spanwerkzeuge bedingte große Anzahl von erforderlichen Montage- und Demontagevorgängen des Spanwerkzeugs führt zu einem großen Verschleiß der Antriebswelle. In der Regel entsteht dabei eine Anzahl Riefen, die sich über den Umfang der zylinderförmigen Antriebswelle verteilen. Die Anzahl dieser Riefen entspricht der Anzahl der Anlagevorsprünge des Spanwerkzeugs. Mit jeder Montage und jeder Demontage können die bereits vorhandenen Riefen in der Oberfläche der ursprünglich zylinderförmigen Antriebswelle weiter vertieft werden. Bei drei Anlagevorsprüngen entstehen typischerweise drei Riefen in der Oberfläche der Antriebswelle, die mit jeder Montage und Demontage eines baugleichen Spanwerkzeugs weiter vertieft werden können. Insbesondere durch den damit verbundenen ungleichmäßigen Verschleiß der Oberfläche an immer den gleichen Stellen der Antriebswelle verschlechtert sich das Rundlauf- und Planlaufverhalten eines auf einer derart verschlissenen Antriebswelle montierten Spanwerkzeugs.

Aus der US 2011/0277611 A1, die die Basis für den Oberbegriff des Anspruchs 1 bildet, ist ein Sägeblatt für ein Multifunktionswerkzeug bekannt, bei dem nicht alle radial vorstehenden Vorsprünge eines Antriebsschafts in entsprechende Aussparungen in der Aufnahmeöffnung des zugehörigen Oszillationswerkzeugs eingreifen.

Aus der US 2,649,868 A ist ein Sägeblatt mit einer Aufnahmeöffnung bekannt, die im Wesentlichen rautenförmig ist. Dadurch kann das Sägeblatt sowohl auf einer zylinderförmigen Antriebswelle als auch auf einer Antriebswelle mit einem rautenförmigen Querschnitt angeordnet werden.

Der Erfindung liegt die Aufgabe zugrunde, ein gattungsgemäßes Spanwerkzeug derart weiterzubilden, dass bei einer Montage und einer Demontage des Spanwerkzeugs auf einer zylinderförmigen Antriebswelle eine geringe Beeinflussung des Rundlauf- und Planlaufverhaltens des auf der Antriebswelle montierten Spanwerkzeugs stattfindet. Diese Aufgabe wird durch ein Spanwerkzeug mit den Merkmalen des Anspruchs 1 gelöst.

Nach der Erfindung ist vorgesehen, dass alle Anlagevorsprünge zu seinen beiden in Umfangsrichtung benachbarten Anlagevorsprüngen unterschiedlich große Abstände aufweisen. Das Spanwerkzeug weist eine Drehebene auf, die senkrecht zur Zentralachse orientiert ist und die Umfangswand schneidet. Die Umfangsrichtung verläuft entlang einer Kreislinie in der Drehebene um die Zentralachse herum. Die Abstände zwischen den mindestens drei Anlagevorsprüngen sind in der Umfangsrichtung entlang der Kreislinie gemessen.

Durch die unterschiedlich großen Abstände des Anlagevorsprungs zu seinen benachbarten Anlagevorsprüngen, ist die Wahrscheinlichkeit verringert, dass bei einer Montage und Demontage des Spanwerkzeugs auf einer zylinderförmigen Antriebswelle die Anlagevorsprünge eine bereits durch vorangegangene Montage- oder Demontagevorgänge entstandene Riefe weiter vertieft wird. Im Gegensatz zum Stand der Technik ist die Gesamtheit aller Anlagevorsprünge nach der Erfindung nicht rotationssymmetrisch bezüglich der Zentralachse an der Umfangswand des Spanwerkzeugs angeordnet.

Im Stand der Technik gibt es bei drei Anlagevorsprüngen auch drei mögliche Winkelstellungen des Spanwerkzeugs bezüglich einer Drehung des Spanwerkzeugs um die Zentralachse, in denen die drei Anlagevorsprünge bei der Montage des Spanwerkzeugs auf der Antriebswelle auf einer bereits vorhandenen Riefe zu liegen kommen. Ein Spanwerkzeug mit drei Anlagevorsprüngen erzeugt bei der Montage auf der Antriebswelle in der Regel drei Riefen in der Oberfläche der Antriebswelle. Aufgrund einer rotationssymmetrischen Anordnung der drei Anlagevorsprünge sind die Anlagevorsprünge in Umfangsrichtung in einem Winkelabstand von jeweils 120° zueinander angeordnet. Dadurch sind die drei bei der Montage des Spanwerkzeugs auf der Antriebswelle entstehenden Riefen auf der Antriebswelle ebenfalls in Umfangsrichtung in einem Winkelabstand von 120° zueinander angeordnet. Bei unveränderter Lage der Antriebswelle und einer Schwenkung eines Spanwerkzeugs nach dem Stand der Technik um 120° oder um 240° um die Drehachse der Antriebswelle liegen die drei Anlagevorsprünge des Spanwerkzeugs erneut in einer bereits vorhandenen Riefe der Antriebswelle. Folglich existieren im Stand der Technik drei Möglichkeiten, das Spanwerkzeug so auf einer zylinderförmigen Antriebswelle mit bereits drei vorhandenen Riefen zu positionieren, dass die bereits vorhandenen Riefen weiter vertieft werden. Dadurch tritt ein unregelmäßiger Verschleiß der Antriebswelle bezüglich ihrer ursprünglich zylinderförmigen Umfangswand ein. Dies beeinflusst das Rund- und Planlaufverhalten eines auf der Antriebswelle montierten Spanwerkzeugs negativ.

Erfindungsgemäß hingegen ist die Anzahl von Winkelstellungen von Antriebswelle und Spanwerkzeug zueinander, in der alle der mindestens drei Anlagevorsprünge auf bereits bestehenden Riefen in der Oberfläche der Antriebswelle zu liegen kommen, immer geringer als die Anzahl der zumindest drei Anlagevorsprünge. Dadurch ist die Wahrscheinlichkeit verringert, dass bereits bestehende Riefen in der Oberfläche der Antriebswelle weiter vertieft werden. Stattdessen entstehen bei der Montage des Spanwerkzeugs auf der Antriebswelle mit größerer Wahrscheinlichkeit als bei gleichmäßig zueinander beabstandeten Anlagevorsprüngen neue Riefen, die versetzt zu den bereits bestehenden Riefen verlaufen. Dadurch erfolgt ein gleichmäßiger Verschleiß der Oberfläche der Antriebswelle. Dies wirkt sich positiv auf das Rund- und Planlaufverhalten eines auf einer derart gleichmäßig verschlissenen Antriebswelle montierten Spanwerkzeugs aus.

Das erfindungsgemäße Spanwerkzeug lässt sich durch die Anlagevorsprünge einfach und leicht auf die Antriebswelle montieren und von dieser demontieren, da die Kontaktfläche zwischen dem Spanwerkzeug und der Antriebswelle gering ist. Insbesondere für dicke und/oder schwere Spanwerkzeuge ist dies vorteilhaft. Durch die kleine Kontaktfläche wird bei Erwärmung des Spanwerkzeugs im Betrieb nur in geringem Maß Wärme vom Spanwerkzeug auf die Antriebswelle übertragen. Die Bohrungsqualitätsklasse der Aufnahmeöffnung kann im Vergleich zur Bohrungsqualitätsklasse einer kreisrunden Aufnahmeöffnung gleich sein.

Erfindungsgemäß sind alle Abstände zwischen benachbarten Anlagevorsprüngen unterschiedlich groß. Dadurch ergibt sich eine weitere Reduzierung der Rotationssymmetrie der Gesamtheit aller Anlagevorsprünge und damit verbunden eine weitere Reduzierung der Wahrscheinlichkeit, dass bei einer Schwenkung des Spanwerkzeugs um seine Zentralachse um weniger als 360° ein Anlagevorsprung in einer bereits zuvor durch dasselbe Spanwerkzeug erzeugte Riefe in der Oberfläche der Antriebswelle zu liegen kommt. Durch die unterschiedliche Größe aller Abstände zwischen benachbarten Anlagevorsprüngen kann lediglich noch eine Teilmenge aus der Gesamtheit aller Anlagevorsprünge rotationssymmetrisch angeordnet werden. Diese Teilmenge ist kleiner, als die Teilmenge aus der Gesamtheit aller Anlagevorsprünge, die rotationssymmetrisch angeordnet werden kann, wenn lediglich genau einer der mindestens drei Anlagevorsprünge zu seinen beiden in Umfangsrichtung benachbarten Anlagevorsprüngen unterschiedlich große Abstände aufweist. Anlagevorsprünge einer rotationssymmetrischen Teilmenge aus der Gesamtheit aller Anlagevorsprünge weisen zueinander in Umfangsrichtung gleich große Abstände auf und sind nicht unmittelbar benachbart zueinander.

Erfindungsgemäß liegt der Masseschwerpunkt des Spanwerkzeugs auf der Zentralachse.

In vorteilhafter Weiterbildung der Erfindung ist jeder Abstand eines ersten Anlagevorsprungs zu jedem vom ersten Anlagevorsprung verschiedenen Anlagevorsprung ungleich zu jedem Abstand jedes weiteren, zweiten Anlagevorsprungs zu jedem vom zweiten Anlagevorsprung verschiedenen Anlagevorsprung. Mit anderen Worten ist keine Teilmenge der Anlagevorsprünge bezüglich der Zentralachse rotationssymmetrisch angeordnet. Dadurch ist sichergestellt, dass bei einer Schwenkung des Spanwerkzeugs um seine Zentralachse derart, dass ein Anlagevorsprung in eine nicht zuvor von diesem Anlagevorsprung erzeugte Riefe in der Antriebswelle zu liegen kommt, keine weiteren Anlagevorsprünge in vom selben Spanwerkzeug zuvor erzeugte Riefen in der Oberfläche der Antriebswelle zu liegen kommen. Dadurch ergibt sich eine gleichmäßige Abnutzung der Oberfläche der Antriebswelle bei der Montage und Demontage von baugleichen Spanwerkzeugen.

In vorteilhafter Weiterbildung der Erfindung beträgt ein größter Wert aller Abstände von je zwei in Umfangsrichtung benachbarten Anlagevorsprüngen mindestens 102% eines kleinsten Werts aller Abstände von je zwei in Umfangsrichtung benachbarten Anlagevorsprüngen. Dadurch ergibt sich ein hinreichend großer Unterschied in den betroffenen Abständen der Anlagevorsprünge, um zu gewährleisten, dass keiner der betroffenen Anlagevorsprünge durch eine Schwenkung des Spanwerkzeugs um seine Zentralachse auf einer durch einen betroffenen Anlagevorsprung erzeugten Riefe in der Oberfläche der Antriebswelle zu liegen kommt.

Vorteilhaft beträgt der größte Wert aller Abstände von je zwei in Umfangsrichtung benachbarten Anlagevorsprüngen höchstens 170% des kleinsten Werts aller Abstände von je zwei in Umfangsrichtung benachbarten Anlagevorsprüngen. Dadurch kann sich ein ansprechender optischer Gesamteindruck in Bezug auf den Verlauf der Umfangswand ergeben. Trotz der unregelmäßigen Abstände der Anlagevorsprünge zueinander kann sich dennoch ein harmonischer Gesamteindruck der Anordnung der Anlagevorsprünge ergeben.

Es berühren zumindest drei Anlagevorsprünge einen gedachten Kreis, der in der Drehebene verläuft und dessen Mittelpunkt auf der Zentralachse liegt. Zumindest einer der mindestens drei Anlagevorsprünge berührt zweckmäßig diesen Kreis lediglich entlang eines Umfangswinkelbereichs des Kreises von weniger als 20°, insbesondere von weniger als 10°, vorteilhaft von weniger als 1°. Dadurch ist der bei einer Montage des Spanwerkzeugs auf einer Antriebswelle mit einem dem Durchmesser des gedachten Kreises entsprechenden Durchmesser von einem Abrieb betroffene Teil der Oberfläche der Antriebswelle sehr klein. Zweckmäßig berühren alle Anlagevorsprünge den gedachten Kreis lediglich entlang eines Umfangswinkelbereichs von weniger als 20°, insbesondere von weniger als 10° und vorteilhaft von weniger als 5°.

In vorteilhafter Weiterbildung der Erfindung weist die Umfangswand zwischen zwei benachbarten Anlagevorsprüngen jeweils einen maximalen Abstand zur Zentralachse auf. Zumindest zwei maximale Abstände sind unterschiedlich groß. Dadurch kann der Masseschwerpunkt des Spanwerkzeugs trotz der unregelmäßigen Abstände der Anlagevorsprünge auf der Zentralachse liegen.

Zweckmäßig sind zwischen den Anlagevorsprüngen Taschen ausgebildet, die im montierten Zustand des Spanwerkzeugs frei bleiben. Vorteilhaft sind die Anlagevorsprünge und die Taschen derart ausgelegt, dass der Masseschwerpunkt des Spanwerkzeugs auf der Zentralachse liegt.

Vorteilhaft weist die Umfangswand höchstens vierzehn und insbesondere höchstens sieben Anlagevorsprünge auf.

Eine weitere Ausgestaltung der Erfindung betrifft ein System umfassend ein Spanwerkzeug und eine zylinderförmige Antriebswelle, wobei das Spanwerkzeug eine durchgehende Aufnahmeöffnung aufweist, wobei durch die Aufnahmeöffnung eine Zentralachse verläuft, die im auf der Antriebswelle montierten Zustand des Spanwerkzeugs einer Drehachse der Antriebswelle entspricht, wobei ein senkrecht zur Drehachse gemessener Durchmesser der Antriebswelle und ein senkrecht zur Zentralachse gemessener Durchmesser der Aufnahmeöffnung derart aufeinander abgestimmt sind, dass die Antriebswelle durch die Aufnahmeöffnung steckbar ist. Die Aufnahmeöffnung ist von einer Umfangswand begrenzt, wobei die Umfangswand mindestens drei Anlagevorsprünge aufweist, mit denen sie im auf der Antriebswelle montierten Zustand abschnittsweise an der Antriebswelle anliegt. Mindestens einer der mindestens drei Anlagevorsprünge weist zu seinen beiden in Umfangsrichtung benachbarten Anlagevorsprüngen unterschiedlich große Abstände auf.

Das Spanwerkzeug des erfindungsgemäßen Systems kann gemäß allen bereits beschriebenen vorteilhaften Varianten weitergebildet sein. Die Zentralachse entspricht dann jeweils der Drehachse.

Durch die unterschiedliche Größe der maximalen Abstände der Umfangswand zur Drehachse zwischen jeweils zwei benachbarten Anlagevorsprüngen kann der Masseschwerpunkt des Systems trotz der unregelmäßigen Abstände der Anlagevorsprünge auf der Drehachse liegen. Dadurch kann ein System umfassend eine zylinderförmige Antriebswelle und ein auf der Antriebswelle angeordnetes erfindungsgemäßes Spanwerkzeug so gestaltet sein, dass das System bei Drehung um die Drehachse keine Unwucht aufweist. Der Masseschwerpunkt des Systems aus Antriebswelle und Spanwerkzeug liegt dann vorteilhaft auf der Drehachse des Systems.

Vorteilhaft sind die Anlagevorsprünge und die Taschen des Spanwerkzeugs derart ausgelegt, dass der Masseschwerpunkt des Systems aus Antriebswelle und Spanwerkzeug auf der Drehachse liegt. Einzelne Taschen können dafür genutzt werden, durch gezielten Materialabtrag am Ort der jeweiligen Tasche eine eventuell vorhandene Restunwucht des Systems aus Spanwerkzeug und Antriebswelle zu minimieren.

Ein Ausführungsbeispiel der Erfindung ist nachfolgend anhand der Zeichnung näher beschrieben. Es zeigen:
- Fig. 1: in einer Seitenansicht ein erfindungsgemäßes Spanwerkzeug,
- Fig. 2: in einer Detaildarstellung den Verlauf der Umfangswand der Aufnahmeöffnung des Spanwerkzeugs aus Fig. 1,
- Fig. 3: in einer Detaildarstellung die Aufnahmeöffnung aus Fig. 2 im auf eine Antriebswelle montierten Zustand des Spanwerkzeugs.

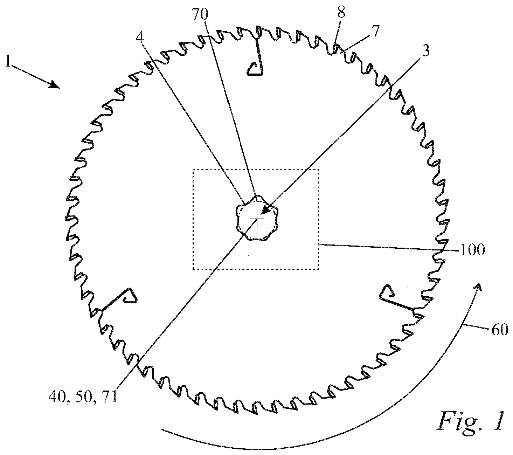

Fig. 1 zeigt ein Spanwerkzeug 1 bzw. ein Zerspanungswerkzeug in einer Seitenansicht. Das Spanwerkzeug 1 ist im Ausführungsbeispiel als Kreissägeblatt ausgeführt. Es kann aber auch vorgesehen sein, dass das Spanwerkzeug beispielsweise als Fräswerkzeug ausgeführt ist. Das Spanwerkzeug 1 nach Fig. 1 weist an seinem Außenumfang zahlreiche Sägezähne 7 auf.

Die Sägezähne 7 umfassen Schneidplatten 8. Zur Anordnung auf einer zylinderförmigen, in Fig. 1 nicht dargestellten Antriebswelle weist das Spanwerkzeug 1 eine durchgehende Aufnahmeöffnung 3 zur Aufnahme der Antriebswelle auf. Die durchgehende Aufnahmeöffnung 3 wird auch als Nabe bezeichnet. Die durchgehende Aufnahmeöffnung 3 ist von einer Umfangswand 54 begrenzt. Durch die Aufnahmeöffnung 3 verläuft eine Zentralachse 50. Im auf der Antriebswelle montierten Zustand des Spanwerkzeugs 1 entspricht die Zentralachse 50 einer Drehachse 40 des Spanwerkzeugs 1. In einer Drehebene 100 verläuft die Umfangswand 4 der Aufnahmeöffnung 3 unrund um die Zentralachse 50. Die Drehebene 100 ist senkrecht zur Zentralachse 50 orientiert und schneidet die Umfangswand 4. Im Betrieb des Spanwerkzeugs 1, im auf der Antriebswelle montierten Zustand des Spanwerkzeugs 1, dreht sich das Spanwerkzeug 1 in der Drehebene 100 in eine Umfangsrichtung 60. Die Umfangsrichtung 60 läuft entlang einer Kreislinie eines Kreises, dessen Mittelpunkt auf der Zentralachse 50 liegt, um die Zentralachse 50 um. Im Ausführungsbeispiel verläuft die Umfangsrichtung 60 in Drehrichtung des Spanwerkzeugs 1 im Betrieb im auf der Antriebswelle montierten Zustand.

Die Umfangswand 4 verläuft in der Drehebene 100 unrund um die Zentralachse 50. In der Drehebene 100 umschließt die Umfangswand 4 einen gedachten Kreis 70. Der Mittelpunkt 71 des gedachten Kreises 70 befindet sich auf der Zentralachse 50. Im auf der Antriebswelle montierten Zustand des Spanwerkzeugs 1 verläuft eine Außenwand der Antriebswelle entlang des gedachten Kreises 70.

Bei der Montage des Spanwerkzeugs 1 auf der Antriebswelle wird die Antriebswelle durch die durchgehende Öffnung 3 geschoben und gegen einen Anschlag der Antriebswelle gedrückt. Zur Befestigung des Spanwerkzeugs 1 auf der Antriebswelle wird auf ein Gewinde der Antriebswelle eine Mutter geschraubt, die das Spanwerkzeug 1 gegen den Anschlag der Antriebswelle presst. Dadurch ist das Spanwerkzeug 1 reibschlüssig auf der Antriebswelle befestigt.

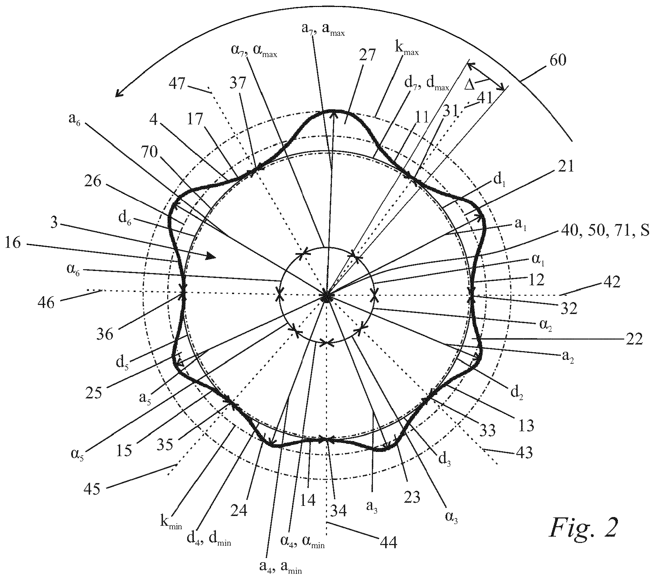

Fig. 2 zeigt in einer Detaildarstellung der durchgehenden Öffnung 3 den Verlauf der Umfangswand 4. Die Umfangswand 4 weist mindestens drei und bevorzugt maximal vierzehn Anlagevorsprünge 11, 12, 13, 14, 15, 16, 17 zur abschnittsweisen Anlage an der Antriebswelle auf. Im Ausführungsbeispiel weist die Umfangswand 4 sieben Anlagevorsprünge 11, 12, 13, 14, 15, 16, 17 auf.

Die Umfangswand 4 verläuft zwischen der Kreislinie des Kreises 70 und der Kreislinie des Kreises kₘₐₓ. Der Radius des Kreises kₘₐₓ ist größer als der Radius des Kreises 70. Der Kreis 70 und der Kreis kₘₐₓ haben denselben Mittelpunkt 71, der auf der Zentralachse 50 liegt. Die Anlagevorsprünge 11, 12, 13, 14, 15, 16, 17 stehen von der Kreislinie des Kreises kₘₐₓ aus gesehen in Richtung auf die Zentralachse 50 gegenüber der Kreislinie kₘₐₓ vor.

Der Anlagevorsprung 11, 12, 13, 14, 15, 16, 17 steht in der Drehebene 100 in Richtung auf die Zentralachse 50 vor. Der Anlagevorsprung 11, 12, 13, 14, 15, 16, 17 berührt den gedachten Kreis 70 in der Drehebene 100 entlang eines Berührabschnitts 31, 32, 33, 34, 35, 36, 37. Die Berührabschnitte 31, 32, 33, 34, 35, 36, 37 sind jeweils den Anlagevorsprüngen 11, 12, 13, 14, 15, 16, 17 mit den um 20 niedrigeren Bezugszeichen zugeordnet. Entlang des Berührabschnitts 31, 32, 33, 34, 35, 36, 37 liegt der Anlagevorsprung 11, 12, 13, 14, 15, 16, 17 an einem Kreisbogenabschnitt des Kreises 70 an. Von der Zentralachse 50 aus gesehen verläuft der Anlagevorsprung 11, 12, 13, 14, 15, 16, 17 außerhalb des Berührabschnitts 31, 32, 33, 34, 35, 36, 37 konvex. Im Ausführungsbeispiel liegt der Berührabschnitt 31, 32, 33, 34, 35, 36, 37 in der Drehebene 100 über einen Umfangswinkelbereich Δ des Kreises 70 von weniger als 20° am Kreis 70 an. Der Anlagevorsprung 11, 12, 13, 14, 15, 16, 17 berührt den Kreis 70 lediglich über einen Umfangswinkelbereich Δ des Kreises 70 von weniger als 20° am Kreis 70. In Fig. 2 ist beispielhaft ein solcher Umfangswinkelbereich Δ für den Berührabschnitt 31 eingezeichnet. Analog zum Umfangswinkelbereich Δ des Berührabschnitts 31 weisen auch die Berührabschnitte 32, 33, 34, 35, 36, 37 nicht eingezeichnete Umfangswinkelbereiche Δ von weniger als 20° auf, in denen die Berührabschnitte am Kreis 70 anliegen. Im gezeigten bevorzugten Ausführungsbeispiel beträgt der Umfangswinkelbereich Δ weniger als 10° und insbesondere weniger als 5°. Alle Anlagevorsprünge 11, 12, 13, 14, 15, 16, 17 berühren in der Drehebene 100 den gedachten Kreis 70.

Die Umfangswand 4 der Aufnahmeöffnung 3 läuft in der Drehebene 100 wellenförmig um die Zentralachse 50 um. Zwischen den Anlagevorsprüngen 11, 12, 13, 14, 15, 16, 17 sind Taschen 21, 22, 23, 24, 25, 26, 27 ausgebildet. Zwischen dem Anlagevorsprung 11 und dem Anlagevorsprung 12 ist die Tasche 21 ausgebildet. Zwischen dem Anlagevorsprung 12 und dem Anlagevorsprung 13 ist die Tasche 22 ausgebildet, und so weiter. Die Tasche 27 ist zwischen dem Anlagevorsprung 17 und dem Anlagevorsprung 11 ausgebildet. Die Tasche 21, 22, 23, 24, 25, 26, 27 ist von der Umfangswand 4 und der Kreislinie des gedachten Kreises 70 begrenzt. Im auf der Antriebswelle montierten Zustand des Spanwerkzeugs 1 ist die Tasche 21, 22, 23, 24, 25, 26, 27 von der Umfangswand 4 und der Antriebswelle begrenzt. Die Tasche 21, 22, 23, 24, 25, 26, 27 bleibt im montierten Zustand des Spanwerkzeugs 1 frei. Zwischen der Antriebswelle und der Umfangswand 4 des Spanwerkzeugs 1 ist im montierten Zustand des Spanwerkzeugs 1 im Bereich der Tasche 21, 22, 23, 24, 25, 26, 27 ein Hohlraum ausgebildet. Entsprechend der Anzahl der Anlagevorsprünge 11, 12, 13, 14, 15, 16, 17 sind mindestens drei und maximal vierzehn, im gezeigten Ausführungsbeispiel sieben Taschen 21, 22, 23, 24, 25, 26, 27 vorgesehen.

Die Umfangswand 4 weist zwischen zwei benachbarten Anlagevorsprüngen 11, 12, 13, 14, 15, 16, 17 jeweils einen maximalen Abstand a₁, a₂, a₃, a₄, a₅, a₆, a₇ zur Zentralachse 50 auf. Der maximale Abstand a₁ ist zwischen dem Anlagevorsprung 11 und dem Anlagevorsprung 12 gemessen und damit der Tasche 21 zugeordnet. Der maximale Abstand a₂ ist zwischen dem Anlagevorsprung 12 und dem Anlagevorsprung 13 gemessen und damit der Tasche 22 zugeordnet, und so weiter. Der maximale Abstand a₇ ist zwischen dem Anlagevorsprung 17 und dem Anlagevorsprung 11 gemessen und damit der Tasche 27 zugeordnet.

Der Abstand der Umfangswand 4 zur Zentralachse 50 nimmt vom Berührabschnitt 31, 32, 33, 34, 35, 36, 37 zu den jeweils benachbarten maximalen Abständen a₁, a₂, a₃, a₄, a₅, a₆, a₇ kontinuierlich zu.

Zumindest zwei maximale Abstände a₁, a₂, a₃, a₄, a₅, a₆, a₇ sind unterschiedlich groß. Im Ausführungsbeispiel sind alle maximalen Abstände a₁, a₂, a₃, a₄, as, a₆, a₇ unterschiedlich groß. Ein größter Wert aₘₐₓ aller maximalen Abstände a₁, a₂, a₃, a₄, a₅, a₆, a₇ entspricht dem größten maximalen Abstand a₇. Ein kleinster Wert aₘᵢₙ aller maximalen Abstände a₁, a₂, a₃, a₄, a₅, a₆, a₇ entspricht dem maximalen Abstand a₄.

Zur besseren Übersicht ist in Fig. 2 ein Kreis kₘᵢₙ eingezeichnet, dessen Radius dem kleinsten Wert aₘᵢₙ entspricht. Der Mittelpunkt des Kreises kₘᵢₙ entspricht dem Mittelpunkt 71. Der Radius des Kreises kₘᵢₙ ist kleiner als der Radius des Kreises kₘₐₓ. Die maximalen Abstände a₁, a₂, a₃, a₄, a₅, a₆, a₇ liegen zwischen den Kreislinien des Kreises kₘᵢₙ und des Kreises kₘₐₓ. Ein größerer maximaler Abstand a₁, a₂, a₃, a₄, a₅, a₆, a₇ bedingt ein größeres Volumen der zugeordneten Tasche 21, 22, 23, 24, 25, 26, 27. Durch die Form und das Volumen der Tasche 21, 22, 23, 24, 25, 26, 27 wird die Lage eines Masseschwerpunkts S des Spanwerkzeugs 1 beeinflusst. Im Ausführungsbeispiel ist die Form und Position der Anlagevorsprünge 11, 12, 13, 14, 15, 16, 17 und das Volumen und die Form der Taschen 21, 22, 23, 24, 25, 26, 27 derart ausgelegt, dass der Masseschwerpunkt S des Spanwerkzeugs 1 auf der Zentralachse 50 liegt.

Wie Fig. 2 zeigt, weist mindestens einer der mindestens drei Anlagevorsprünge 11, 12, 13, 14, 15, 16, 17 zu seinen beiden in Umfangsrichtung 60 benachbarten Anlagevorsprüngen einen unterschiedlich großen Abstand d₁, d₂, d₃, d₄, d₅, d₆, d₇ auf. Beispielsweise ist ein erster Anlagevorsprung 11 zu einem zweiten Anlagevorsprung 12 benachbart, der wiederum zu einem dritten Anlagevorsprung 13 benachbart ist. Der zweite Anlagevorsprung 12 weist zum ersten Anlagevorsprung 11 einen ersten Abstand d₁ und zum dritten Anlagevorsprung 13 einen zweiten Abstand d₂ auf. Der erste Abstand d₁ und der zweite Abstand d₂ sind unterschiedlich groß. Der zweite Abstand d₂ ist größer als der erste Abstand d₁. Die mindestens drei Anlagevorsprünge 11, 12, 13, 14, 15, 16, 17 sind in Umfangsrichtung 60 in unregelmäßigen Abständen d₁, d₂, d₃, d₄, d₅, d₆, d₇ zueinander angeordnet.

Die Abstände d₁, d₂, d₃, d₄, d₅, d₆, d₇ sind entlang der Kreislinie des gedachten Kreises 70 zwischen je zwei benachbarten Berührabschnitten 31, 32, 33, 34, 35, 36, 37 gemessen. Im Ausführungsbeispiel verlaufen die Berührabschnitte 31, 32, 33, 34, 35, 36, 37 in der Drehebene 100 entlang eines Umfangswinkelbereichs Δ des Kreises 70. Bei einer solchen Erstreckung eines Berührabschnitts über einen Kreisbogenabschnitt wird zur Bestimmung der Abstände d₁, d₂, d₃, d₄, d₅, d₆, d₇ die Länge des Kreisbogenabschnitts des zugehörigen Berührabschnitts 31, 32, 33, 34, 35, 36, 37 ermittelt. Auf der halben Länge des Kreisbogenabschnitts des Berührabschnitts 31, 32, 33, 34, 35, 36, 37 befindet sich eine bezüglich der Umfangsrichtung 60 zentrale Stelle des Berührabschnitts 31, 32, 33, 34, 35, 36, 37, von der ausgehend zu einer analog ermittelten benachbarten zentralen Stelle eines benachbarten Berührabschnitts 31, 32, 33, 34, 35, 36, 37 der Abstand d₁, d₂, d₃, d₄, d₅, d₆, d₇ der benachbarten Anlagevorsprünge 11, 12, 13, 14, 15, 16, 17 gemessen wird.

Alternativ können die Abstände der Anlagevorsprünge 11, 12, 13, 14, 15, 16, 17 zueinander als Winkelabstände α₁, α₂, α₃, α₄, α₅, α₆, α₇ bestimmt werden. Der Winkelabstand α₁ entspricht dem Winkel zwischen einer gedachten Verbindungslinie vom Mittelpunkt 71 zur zentralen Stelle des Berührabschnitts 31 und einer weiteren gedachten Verbindungslinie vom Mittelpunkt 71 zur zentralen Stelle des Berührabschnitts 32. Die gedachte Verbindungslinie verläuft entlang einer in Fig. 2 gestrichelt eingezeichneten Winkelposition 41. Die weitere gedachte Verbindungslinie verläuft in Fig. 2 entlang einer ebenfalls gestrichelt eingezeichneten Winkelposition 42. Die Winkelposition 41 ist in der in Fig. 2 dargestellten Relativpositionierung der Umfangswand 4 und des Kreises 70 dem Anlagevorsprung 11 und dem zugehörigen Berührabschnitt 31 zugeordnet. Entsprechend sind die Winkelpositionen 42, 43, 44, 45, 46, 47 den Anlagevorsprüngen 12, 13, 14, 15, 16, 17 und den Berührabschnitten 32, 33, 34, 35, 36, 37 zugeordnet. Der Winkelabstand α₂ entspricht dem Winkel zwischen der Winkelposition 42 und der Winkelposition 43. Der Winkelabstand α₃ entspricht dem Winkel zwischen der Winkelposition 43 und der Winkelposition 44, und so weiter. Der Winkelabstand α₇ entspricht dem Winkel zwischen der Winkelposition 47 und der Winkelposition 41. Die Winkelabstände α₁, α₂, α₃, α₄, α₅, α₆, α₇ sind zumindest teilweise unterschiedlich groß. Im Ausführungsbeispiel sind alle Winkelabstände α₁, α₂, α₃, α₄, α₅, α₆, α₇ unterschiedlich groß. Ebenso sind alle Abstände d₁, d₂, d₃, d₄, d₅, d₆, d₇ unterschiedlich groß. Alle Aussagen zu den Abständen d₁, d₂, d₃, d₄, d₅, d₆, d₇ werden analog von den Winkelabständen α₁, α₂, α₃, α₄, α₅, α₆, α₇ erfüllt. Analog zum größten Wert dₘₐₓ und zum kleinsten Wert dₘᵢₙ aller Abstände d₁, d₂, d₃, d₄, d₅, d₆, d₇ existieren ein größter Wert αₘₐₓ aller Winkelabstände α₁, α₂, α₃, α₄, α₅, α₆, α₇ und ein kleinster Wert αₘᵢₙ aller Winkelabstände α₁, α₂, α₃, α₄, α₅, α₆, a₇. Die Aussagen zum größten Wert dₘₐₓ und zum kleinsten Wert dₘᵢₙ sind analog auf den größten Wert αₘₐₓ und den kleinsten Wert αₘᵢₙ zu übertragen.

Jeder Abstand eines ersten Anlagevorsprungs 11, 12, 13, 14, 15, 16, 17 zu jedem vom ersten Anlagevorsprung 11, 12, 13, 14,15, 16, 17 verschiedenen Anlagevorsprung 11, 12, 13, 14, 15, 16, 17 ist ungleich zu jedem Abstand jedes weiteren, zweiten Anlagevorsprungs 11, 12, 13, 14, 15, 16, 17 zu jedem vom zweiten Anlagevorsprung 11, 12, 13, 14, 15, 16, 17 verschiedenen Anlagevorsprung 11, 12, 13, 14, 15, 16, 17. Dasselbe gilt analog für die Winkelabstände α₁, α₂, α₃, α₄, α₅, α₆, α₇. So ist beispielsweise die Summe der Abstände d₁ und d₂, also der Abstand zwischen dem Anlagevorsprung 11 und dem Anlagevorsprung 13, ungleich der Summe der Abstände d₃ und d₄, also dem Abstand zwischen dem Anlagevorsprung 13 und dem Anlagevorsprung 15. Es existiert keine Teilmenge von zentralen Stellen der Berührabschnitte 31, 32, 33, 34, 35, 36, 37, die rotationssymmetrisch bezüglich der Zentralachse 50 ist.

Im folgenden Gedankenexperiment soll angenommen werden, dass bei einer Schwenkung des Spanwerkzeugs 1 um die Zentralachse 50 die Winkelpositionen 41, 42, 42, 44, 45, 46, 47 unabhängig von der Schwenkung vollkommen ortsfest bleiben. Bei einer Schwenkung des Spanwerkzeugs 1 um die Zentralachse 50 um einen Winkel, der dem Winkelabstand α₁ entspricht, kommt dann die zentrale Stelle des Berührabschnitts 31 des Anlagevorsprungs 11 auf der Winkelposition 42 zu liegen. Alle anderen zentralen Stellen der Berührabschnitte 32, 33, 34, 35, 36, 37 liegen dann neben den übrigen Winkelpositionen 41, 43, 44, 45, 46, 47. Anders ausgedrückt kommt außer dem Berührabschnitt 31 kein weiterer Berührabschnitt 32, 33, 34, 35, 36, 37 an einer Stelle zu liegen, an der zuvor eine zentrale Stelle eines Berührabschnitts 31, 32, 33, 34, 35, 36 37 lag.

Bei der Demontage eines ersten Spanwerkzeugs 1 von einer zylinderförmigen Antriebswelle, deren Durchmesser dem Durchmesser des gedachten Kreises 70 entspricht, und der anschließenden Montage eines zweiten, baugleichen Spanwerkzeugs 1 existiert demnach nur eine einzige relative Drehposition von zweitem Spanwerkzeug 1 und Antriebswelle, bei der die zentralen Stellen eines Berührabschnitts 31, 32, 33, 34, 35, 36 37 des ersten Spanwerkzeugs 1 auf dieselben Stellen auf der Antriebswelle zu liegen kommen, auf denen bereits zuvor Berührabschnitte 31, 32, 33, 34, 35, 36 37 des ersten Spanwerkzeugs 1 lagen. Dadurch ist die Wahrscheinlichkeit, dass beim Abziehen und Aufziehen des Spanwerkzeugs 1 von und auf die Antriebswelle Riefen an derselben Stelle entstehen, sehr gering.

Ein größter Wert dₘₐₓ aller Abstände d₁, d₂, d₃, d₄, d₅, d₆, d₇ von je zwei in Umfangsrichtung 60 benachbarten Anlagevorsprüngen 11, 12, 13, 14, 15, 16, 17 beträgt mindestens 102% eines kleinsten Werts dₘᵢₙ aller Abstände d₁, d₂, d₃, d₄, d₅, d₆, d₇ von zwei in Umfangsrichtung 60 benachbarten Anlagevorsprüngen 11, 12, 13, 14, 15, 16, 17. Im Ausführungsbeispiel entspricht der größte Wert dₘₐₓ aller Abstände d₁, d₂, d₃, d₄, d₅, d₆, d₇ dem Abstand d₇. Der kleinste Wert dₘᵢₙ aller Abstände d₁, d₂, d₃, d₄, d₅, d₆, d₇ entspricht dem Abstand d₄. Der Abstand d₇ beträgt mindestens 102% des Abstands d₄.

Der größte Wert dₘₐₓ aller Abstände d₁, d₂, d₃, d₄, d₅, d₆, d₇ von je zwei in Umfangsrichtung 60 benachbarten Anlagevorsprüngen 11, 12, 13, 14, 15, 16, 17 beträgt höchstens 170% des kleinsten Werts dₘᵢₙ aller Abstände d₁, d₂, d₃, d₄, d₅, d₆, d₇ von je zwei in Umfangsrichtung benachbarten Anlagevorsprüngen 11, 12, 13, 14, 15, 16, 17. Der Abstand d₇ beträgt weniger als 170% des Abstands d₄.

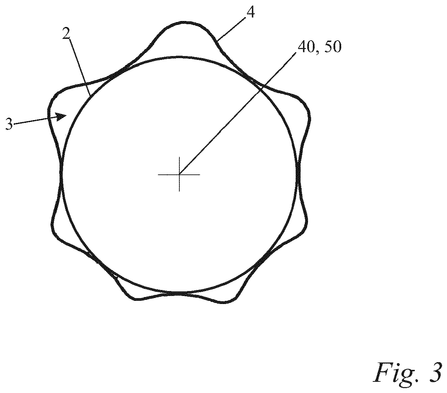

Fig. 3 zeigt die Aufnahmeöffnung 3 des Spanwerkzeugs 1 aus den Fig. 1 und 2 im auf einer Antriebswelle 2 montierten Zustand des Spanwerkzeugs 1. Die Außenseite der Umfangswand der zylinderförmigen Antriebswelle 2 nimmt in der Drehebene 100 die Position des in Fig. 2 dargestellten gedachten Kreises 70 ein. Sämtliche über den gedachten Kreis 70 im Zusammenhang mit den einzelnen Elementen der Aufnahmeöffnung 3 bzw. der Umfangswand 4 getroffenen Aussagen gelten so auch für die Umfangswand der zylinderförmigen Antriebswelle 2.

Das Spanwerkzeug 1 und die zylinderförmige Antriebswelle 2 sind Teil eines Systems. Die Drehachse 40 des Spanwerkzeugs 1 entspricht der Drehachse dieses Systems im auf der Antriebswelle 2 montierten Zustand des Spanwerkzeugs 1 und auch der Drehachse der Antriebswelle 2. Ein senkrecht zur Drehachse 40 gemessener Durchmesser der Antriebswelle und ein senkrecht zur Zentralachse 50 gemessener Durchmesser der Aufnahmeöffnung 3 sind derart aufeinander abgestimmt, dass die Antriebswelle 2 durch die Aufnahmeöffnung 3 steckbar ist. Im auf der Antriebswelle 2 montierten Zustand des Systems, bzw. des Spanwerkzeugs 1, liegt der Anlagevorsprung 11, 12, 13, 14, 15, 16, 17 mit seinem Berührabschnitt 31, 32, 33, 34, 35, 36, 37 an der Antriebswelle 2 an.

Durch die unterschiedliche Größe der maximalen Abstände a₁, a₂, a₃, a₄, a₅, a₆, a₇ der Umfangswand 4 zur Drehachse 40 zwischen jeweils zwei benachbarten Anlagevorsprüngen 11, 12, 13, 14, 15, 16, 17, bzw. durch die Auslegung der Anlagevorsprünge 11, 12, 13, 14, 15, 16, 17 und der Taschen 21, 22, 23, 24, 25, 26, 27, liegt der Masseschwerpunkt des Systems trotz der unregelmäßigen Abstände d₁, d₂, d₃, d₄, d₅, d₆, d₇ der Anlagevorsprünge 11, 12, 13, 14, 15, 16, 17 auf der Drehachse 40. Das System aus der zylinderförmigen Antriebswelle 2 und dem auf der Antriebswelle 2 angeordneten Spanwerkzeug 1 ist so gestaltet, dass das System bei Drehung um die Drehachse 40 keine Unwucht aufweist.

## Patentansprüche

1. Spanwerkzeug zur Anordnung auf einer zylinderförmigen Antriebswelle (2), wobei das Spanwerkzeug (1) eine durchgehende Aufnahmeöffnung (3) zur Aufnahme der Antriebswelle (2) aufweist, wobei durch die Aufnahmeöffnung (3) eine Zentralachse (50) verläuft, die im auf der Antriebswelle (2) montierten Zustand des Spanwerkzeugs (1) einer Drehachse (40) des Spanwerkzeugs (1) entspricht, wobei die Aufnahmeöffnung (3) von einer Umfangswand (4) begrenzt ist, wobei die Umfangswand (4) mindestens drei Anlagevorsprünge (11, 12, 13, 14, 15, 16, 17) zur abschnittsweisen Anlage an der Antriebswelle (2) aufweist, wobei mindestens einer der mindestens drei Anlagevorsprünge (11, 12, 13, 14, 15, 16, 17) zu seinen beiden in Umfangsrichtung (60) benachbarten Anlagevorsprüngen (11, 12, 13, 14, 15, 16, 17) unterschiedlich große Abstände (d₁, d₂, d₃, d₄, d₅, d₆, d₇) aufweist, wobei der Masseschwerpunkt (S) des Spanwerkzeugs (1) auf der Zentralachse (50) liegt,
**dadurch gekennzeichnet, dass** alle Abstände (d₁, d₂, d₃, d₄, d₅, d₆, d₇) zwischen benachbarten Anlagevorsprüngen (11, 12, 13, 14, 15, 16, 17) unterschiedlich groß sind.

2. Spanwerkzeug nach Anspruch 1,
**dadurch gekennzeichnet, dass** eine Drehebene (100) senkrecht zur Zentralachse (50) orientiert ist und die Umfangswand (4) schneidet, dass die Anlagevorsprünge (11, 12, 13, 14, 15, 16, 17) in der Drehebene (100) in Richtung auf die Zentralachse (50) vorstehen, dass die Anlagevorsprünge (11, 12, 13, 14, 15, 16, 17) einen gedachten Kreis (70) in der Drehebene (100) entlang von Berührabschnitten (31, 32, 33, 34, 35, 36, 37) berühren, und dass die Anlagevorsprünge (11, 12, 13, 14, 15, 16, 17) außerhalb der Berührabschnitte (31, 32, 33, 34, 35, 36, 37) von der Zentralachse (50) aus gesehen konvex verlaufen.

3. Spanwerkzeug nach Anspruch 1 oder 2,
**dadurch gekennzeichnet, dass** jeder Abstand eines ersten Anlagevorsprungs (11, 12, 13, 14, 15, 16, 17) zu jedem vom ersten Anlagevorsprung (11, 12, 13, 14, 15, 16, 17) verschiedenen Anlagevorsprung (11, 12, 13, 14, 15, 16, 17) ungleich jedem Abstand jedes weiteren, zweiten Anlagevorsprungs (11, 12, 13, 14, 15, 16, 17) zu jedem vom zweiten Anlagevorsprung (11, 12, 13, 14, 15, 16, 17) verschiedenen Anlagevorsprung (11, 12, 13, 14, 15, 16, 17) ist.

4. Spanwerkzeug nach einem der Ansprüche 1 bis 3,
**dadurch gekennzeichnet, dass** ein größter Wert (dₘₐₓ) aller Abstände (d₁, d₂, d₃, d₄, d₅, d₆, d₇) von je zwei in Umfangsrichtung (60) benachbarten Anlagevorsprüngen (11, 12, 13, 14, 15, 16, 17) mindestens 102% eines kleinsten Werts (dₘᵢₙ) aller Abstände (d₁, d₂, d₃, d₄, d₅, d₆, d₇) von je zwei in Umfangsrichtung (60) benachbarten Anlagevorsprüngen (11, 12, 13, 14, 15, 16, 17) beträgt.

5. Spanwerkzeug nach einem der Ansprüche 1 bis 4,
**dadurch gekennzeichnet, dass** der größte Wert (dₘₐₓ) aller Abstände (d₁, d₂, d₃, d₄, d₅, d₆, d₇) von je zwei in Umfangsrichtung (60) benachbarten Anlagevorsprüngen (11, 12, 13, 14, 15, 16, 17) höchstens 170% des kleinsten Werts (dₘᵢₙ) aller Abstände (d₁, d₂, d₃, d₄, d₅, d₆, d₇) von je zwei in Umfangsrichtung (60) benachbarten Anlagevorsprüngen (11, 12, 13, 14, 15, 16, 17) beträgt.

6. Spanwerkzeug nach einem der Ansprüche 1 bis 5,
**dadurch gekennzeichnet, dass** zumindest drei Anlagevorsprünge (11, 12, 13, 14, 15, 16, 17) in der Drehebene (100) einen gedachten Kreis (70) berühren, dessen Mittelpunkt (71) auf der Zentralachse (50) liegt, und dass zumindest einer der mindestens drei Anlagevorsprünge (11, 12, 13, 14, 15, 16, 17) den Kreis (70) lediglich entlang eines Umfangswinkelbereichs (Δ) des Kreises (70) von weniger als 20° berührt.

7. Spanwerkzeug nach einem der Ansprüche 1 bis 6,
**dadurch gekennzeichnet, dass** alle Anlagevorsprünge (11, 12, 13, 14, 15, 16, 17) in der Drehebene (100) einen gedachten Kreis (70) berühren, dessen Mittelpunkt (71) auf der Zentralachse (50) liegt.

8. Spanwerkzeug nach einem der Ansprüche 1 bis 7,
**dadurch gekennzeichnet, dass** die Umfangswand (4) zwischen zwei benachbarten Anlagevorsprüngen (11, 12, 13, 14, 15, 16, 17) jeweils einen maximalen Abstand (a₁, a₂, a₃, a₄, a₅, a₆, a₇) zur Zentralachse (50) aufweist, und dass zumindest zwei maximale Abstände (a₁, a₂, a₃, a₄, a₅, a₆, a₇) unterschiedlich groß sind.

9. Spanwerkzeug nach einem der Ansprüche 1 bis 8,
**dadurch gekennzeichnet, dass** zwischen den Anlagevorsprüngen (11, 12, 13, 14, 15, 16, 17) Taschen (21, 22, 23, 24, 25, 26, 27) ausgebildet sind, die im montierten Zustand des Spanwerkzeugs (1) frei bleiben, und dass die Anlagevorsprünge (11, 12, 13, 14, 15, 16, 17) und die Taschen (21, 22, 23, 24, 25, 26, 27) derart ausgelegt sind, dass der Masseschwerpunkt (S) des Spanwerkzeugs (1) auf der Zentralachse (50) liegt.

10. Spanwerkzeug nach einem der Ansprüche 1 bis 9,
**dadurch gekennzeichnet, dass** die Umfangswand (4) höchstens vierzehn und insbesondere höchstens sieben Anlagevorsprünge (11, 12, 13, 14, 15, 16, 17) aufweist.

## Claims

1. Material-removing tool for arrangement on a cylindrical drive shaft (2), wherein the material-removing tool (1) has a receiving through-opening (3) for receiving the drive shaft (2), wherein a central axis (50) runs through the receiving opening (3) and corresponds to an axis of rotation (40) of the material-removing tool (1) in the mounted state of the material-removing tool (1) on the drive shaft (2), wherein the receiving opening (3) is delimited by a circumferential wall (4), wherein the circumferential wall (4) has at least three bearing projections (11, 12, 13, 14, 15, 16, 17) for bearing against the drive shaft (2) in certain portions, wherein at least one of the at least three bearing projections (11, 12, 13, 14, 15, 16, 17) is at different distances (d₁, d₂, d₃, d₄, d₅, d₆, d₇) from the two bearing projections (11, 12, 13, 14, 15, 16, 17) that adjoin it in the circumferential direction (60), wherein the centre of gravity (S) of the material-removing tool (1) lies on the central axis (50),
**characterized in that** all the distances (d₁, d₂, d₃, d₄, d₅, d₆, d₇) between adjacent bearing projections (11, 12, 13, 14, 15, 16, 17) are different.

2. Material-removing tool according to claim 1,
**characterized in that** a plane of rotation (100) is oriented perpendicularly in relation to the central axis (50) and intersects the circumferential wall (4), **in that** the bearing projections (11, 12, 13, 14, 15, 16, 17) project towards the central axis (50) in the plane of rotation (100), **in that** the bearing projections (11, 12, 13, 14, 15, 16, 17) make contact with an imaginary circle (70) in the plane of rotation (100) along contact portions (31, 32, 33, 34, 35, 36, 37), and **in that** the bearing projections (11, 12, 13, 14, 15, 16, 17) are convex outside the contact portions (31, 32, 33, 34, 35, 36, 37) as seen from the central axis (50).

3. Material-removing tool according to claim 1 or 2,
**characterized in that** any distance between a first bearing projection (11, 12, 13, 14, 15, 16, 17) and any bearing projection (11, 12, 13, 14, 15, 16, 17) that is not the first bearing projection (11, 12, 13, 14, 15, 16, 17) is not the same as any distance between any further, second bearing projection (11, 12, 13, 14, 15, 16, 17) and any bearing projection (11, 12, 13, 14, 15, 16, 17) that is not the second bearing projection (11, 12, 13, 14, 15, 16, 17).

4. Material-removing tool according to one of claims 1 to 3,
**characterized in that** the largest value (dₘₐₓ) of all the distances (d₁, d₂, d₃, d₄, d₅, d₆, d₇) between each pair of bearing projections (11, 12, 13, 14, 15, 16, 17) that are adjacent in the circumferential direction (60) is at least 102% of the smallest value (dₘᵢₙ) of all the distances (d₁, d₂, d₃, d₄, d₅, d₆, d₇) between each pair of bearing projections (11, 12, 13, 14, 15, 16, 17) that are adjacent in the circumferential direction (60).

5. Material-removing tool according to one of claims 1 to 4,
**characterized in that** the largest value (dₘₐₓ) of all the distances (d₁, d₂, d₃, d₄, d₅, d₆, d₇) between each pair of bearing projections (11, 12, 13, 14, 15, 16, 17) that are adjacent in the circumferential direction (60) is at most 170% of the smallest value (dₘᵢₙ) of all the distances (d₁, d₂, d₃, d₄, d₅, d₆, d₇) between each pair of bearing projections (11, 12, 13, 14, 15, 16, 17) that are adjacent in the circumferential direction (60).

6. Material-removing tool according to one of claims 1 to 5,
**characterized in that** at least three bearing projections (11, 12, 13, 14, 15, 16, 17) make contact with an imaginary circle (70), the centre point (71) of which lies on the central axis (50), in the plane of rotation (100), and **in that** at least one of the at least three bearing projections (11, 12, 13, 14, 15, 16, 17) makes contact with the circle (70) only along a circumferential angular region (Δ) of the circle (70) of less than 20°.

7. Material-removing tool according to one of claims 1 to 6,
**characterized in that** all the bearing projections (11, 12, 13, 14, 15, 16, 17) make contact with an imaginary circle (70), the centre point (71) of which lies on the central axis (50), in the plane of rotation (100).

8. Material-removing tool according to one of claims 1 to 7,
**characterized in that** the circumferential wall (4) has a respective maximum distance (a₁, a₂, a₃, a₄, a₅, a₆, a₇) from the central axis (50) between two adjacent bearing projections (11, 12, 13, 14, 15, 16, 17), and **in that** at least two maximum distances (a₁, a₂, a₃, a₄, a₅, a₆, a₇) are different.

9. Material-removing tool according to one of claims 1 to 8,
**characterized in that** pockets (21, 22, 23, 24, 25, 26, 27), which remain free in the mounted state of the material-removing tool (1), are formed between the bearing projections (11, 12, 13, 14, 15, 16, 17), and **in that** the bearing projections (11, 12, 13, 14, 15, 16, 17) and the pockets (21, 22, 23, 24, 25, 26, 27) are designed in such a way that the centre of gravity (S) of the material-removing tool (1) lies on the central axis (50).

10. Material-removing tool according to one of claims 1 to 9,
**characterized in that** the circumferential wall (4) has at most fourteen and in particular at most seven bearing projections (11, 12, 13, 14, 15, 16, 17).

## Revendications

1. Outil de coupe destiné à l'agencement sur un arbre d'entraînement (2) cylindrique, l'outil de coupe (1) présentant une ouverture de réception (3) traversante destinée à la réception de l'arbre d'entraînement (2), un axe central (50) s'étendant à travers l'ouverture de réception (3), lequel axe central correspond à un axe de rotation (40) de l'outil de coupe (1) dans l'état de l'outil de coupe (1) monté sur l'arbre d'entraînement (2), l'ouverture de réception (3) étant limitée par une paroi périphérique (4), la paroi périphérique (4) présentant au moins trois saillies d'appui (11, 12, 13, 14, 15, 16, 17) pour l'appui, au moins dans certaines parties, sur l'arbre d'entraînement (2), au moins l'une des au moins trois saillies d'appui (11, 12, 13, 14, 15, 16, 17) présentant, par rapport à ses deux saillies d'appui (11, 12, 13, 14, 15, 16, 17) adjacentes dans la direction périphérique (60), des distances (d₁, d₂, d₃, d₄, d₅, d₆, d₇) de tailles différentes, le centre de masse (S) de l'outil de coupe (1) se situant sur l'axe central (50),
**caractérisé en ce que** toutes les distances (d₁, d₂, d₃, d₄, d₅, d₆, d₇) entre des saillies d'appui (11, 12, 13, 14, 15, 16, 17) adjacentes sont de tailles différentes.

2. Outil de coupe selon la revendication 1,
**caractérisé en ce qu'**un plan de rotation (100) est orienté perpendiculairement à l'axe central (50) et croise la paroi périphérique (4), **en ce que** les saillies d'appui (11, 12, 13, 14, 15, 16, 17) font saillie en direction de l'axe central (50) dans le plan de rotation (100), **en ce que** les saillies d'appui (11, 12, 13, 14, 15, 16, 17) sont en contact avec un cercle imaginaire (70) dans le plan de rotation (100) le long de parties de contact (31, 32, 33, 34, 35, 36, 37), et **en ce que** les saillies d'appui (11, 12, 13, 14, 15, 16, 17) s'étendent de manière convexe vues à partir de l'axe central (50) en dehors des parties de contact (31, 32, 33, 34, 35, 36, 37).

3. Outil de coupe selon la revendication 1 ou 2,
**caractérisé en ce que** chaque distance d'une première saillie d'appui (11, 12, 13, 14, 15, 16, 17) à chaque saillie d'appui (11, 12, 13, 14, 15, 16, 17) différente de la première saillie d'appui (11, 12, 13, 14, 15, 16, 17) est différente de chaque distance de chaque autre deuxième saillie d'appui (11, 12, 13, 14, 15, 16, 17) à chaque saillie d'appui (11, 12, 13, 14, 15, 16, 17) différente de la deuxième saillie d'appui (11, 12, 13, 14, 15, 16, 17).

4. Outil de coupe selon l'une des revendications 1 à 3,
**caractérisé en ce qu'**une valeur la plus grande (dₘₐₓ) de toutes les distances (d₁, d₂, d₃, d₄, d₅, d₆, d₇) de respectivement deux saillies d'appui (11, 12, 13, 14, 15, 16, 17) adjacentes dans la direction périphérique (60) vaut au moins 102 % d'une valeur la plus petite (dₘᵢₙ) de toutes les distances (d₁, d₂, d₃, d₄, d₅, d₆, d₇) de respectivement deux saillies d'appui (11, 12, 13, 14, 15, 16, 17) adjacentes dans la direction périphérique (60).

5. Outil de coupe selon l'une des revendications 1 à 4,
**caractérisé en ce que** la valeur la plus grande (dₘₐₓ) de toutes les distances (d₁, d₂, d₃, d₄, d₅, d₆, d₇) de respectivement deux saillies d'appui (11, 12, 13, 14, 15, 16, 17) adjacentes dans la direction périphérique (60) vaut au maximum 170 % de la valeur la plus petite (dₘᵢₙ) de toutes les distances (d₁, d₂, d₃, d₄, d₅, d₆, d₇) de respectivement deux saillies d'appui (11, 12, 13, 14, 15, 16, 17) adjacentes dans la direction périphérique (60).

6. Outil de coupe selon l'une des revendications 1 à 5,
**caractérisé en ce qu'**au moins trois saillies d'appui (11, 12, 13, 14, 15, 16, 17) sont en contact avec un cercle imaginaire (70) dans le plan de rotation (100), cercle dont le centre (71) se situe sur l'axe central (50), et **en ce qu'**au moins l'une des au moins trois saillies d'appui (11, 12, 13, 14, 15, 16, 17) est en contact avec le cercle (70) seulement le long d'une zone angulaire périphérique (Δ) du cercle (70) de moins de 20°.

7. Outil de coupe selon l'une des revendications 1 à 6,
**caractérisé en ce que** toutes les saillies d'appui (11, 12, 13, 14, 15, 16, 17) sont en contact avec un cercle imaginaire (70) dans le plan de rotation (100), cercle dont le centre (71) se situe sur l'axe central (50).

8. Outil de coupe selon l'une des revendications 1 à 7,
**caractérisé en ce que** la paroi périphérique (4) entre deux saillies d'appui (11, 12, 13, 14, 15, 16, 17) adjacentes présente respectivement une distance maximale (a₁, a₂, a₃, a₄, a₅, a₆, a₇) à l'axe central (50), et **en ce qu'**au moins deux distances maximales (a₁, a₂, a₃, a₄, a₅, a₆, a₇) sont de tailles différentes.

9. Outil de coupe selon l'une des revendications 1 à 8,
**caractérisé en ce que** des cavités (21, 22, 23, 24, 25, 26, 27) sont formées entre les saillies d'appui (11, 12, 13, 14, 15, 16, 17), lesquelles cavités demeurent libres dans l'état monté de l'outil de coupe (1), et **en ce que** les saillies d'appui (11, 12, 13, 14, 15, 16, 17) et les cavités (21, 22, 23, 24, 25, 26, 27) sont configurées de telle sorte que le centre de masse (S) de l'outil de coupe (1) se situe sur l'axe central (50).

10. Outil de coupe selon l'une des revendications 1 à 9,
**caractérisé en ce que** la paroi périphérique (4) présente au maximum quatorze et en particulier au maximum sept saillies d'appui (11, 12, 13, 14, 15, 16, 17).
